(19) Europäisches Patentamt
European Patent Office
Office européen des brevets

(11) Veröffentlichungsnummer: **0 327 909 B1**

# (12) EUROPÄISCHE PATENTSCHRIFT

(45) Veröffentlichungstag der Patentschrift: **18.12.91 Patentblatt 91/51**

(51) Int. Cl.$^5$: **A01N 49/00**, A01N 3/00, // (A01N49/00, 47:30)

(21) Anmeldenummer: **89101497.9**

(22) Anmeldetag: **28.01.89**

## (54) Mittel zur Verminderung der Transpiration von Pflanzen.

(30) Priorität: **06.02.88 DE 3803667**

(43) Veröffentlichungstag der Anmeldung: **16.08.89 Patentblatt 89/33**

(45) Bekanntmachung des Hinweises auf die Patenterteilung: **18.12.91 Patentblatt 91/51**

(84) Benannte Vertragsstaaten: **AT BE DE ES FR GB IT NL**

(56) Entgegenhaltungen: **EP-A- 0 078 509**

(73) Patentinhaber: **BASF Aktiengesellschaft
Carl-Bosch-Strasse 38
W-6700 Ludwigshafen (DE)**

(72) Erfinder: **Schulz, Günter, Dr.
Carl-Bosch-Strasse 96
W-6700 Ludwigshafen (DE)**
Erfinder: **Schubert,Jürgen, Dr.
Am oberen Luisenpark 2
W-6800 Mannheim 1 (DE)**
Erfinder: **Sauter, Hubert, Dr.
Neckarpromenade 20
W-6800 Mannheim 1 (DE)**
Erfinder: **Grossmann, Klaus, Dr.
Wilhelm-Busch-Strasse 5
W-6703 Limburgerhof (DE)**
Erfinder: **Jung, Johann, Prof. Dr.
Hardenburgstrasse 19
W-6703 Limburgerhof (DE)**

EP 0 327 909 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft Mittel zur Verminderung der Transpiration von Pflanzen und/oder zur Vermeidung von Beeinträchtigungen der Pflanzen durch Hitze- und Trockenstreß auf der Basis von Acetylenverbindungen und Phenylbenzylharnstoffen.

Außerdem betrifft die Erfindung ein Verfahren zur Verminderung der Transpiration von Pflanzen, sowie die Verwendung eines Gemisches bestehend aus mindestens einer Acetylenverbindung und mindestens einem Phenylbenzylharnstoff zur Transpirationsminderung bei Pflanzen.

Es ist bekannt, daß das in Pflanzen natürlicherweise vorkommende Phytohormon Abscisinsäure (ABA) regulierend in verschiedene physiologische Prozesse der Pflanzen eingreift. (Die Pharmazie 27.619 (1972) ; B.V. Milborrow "Abscisic Acid" in "Phytohormones and Related Compounds—A Comprehensive Treatise" Vol. I. S 295 ff. Editors : Letham Goodwin and Higgins, Elsevier 1978).

So beeinflußt ABA beispielsweise die Samen- und Knospenruhe, die Fruchtreifung und den Abscissionsprozeß von Früchten und Blättern. Von besonderer Bedeutung ist die Abscisinsäure bei der Regulierung des pflanzlichen Wasserhaushaltes. So wird z.B. bei Trockenheit durch verstärkte Biosynthese die endogene Konzentration von ABA in den Blättern erhöht, dies führt dann zu einer Schließung der Spaltöffnung der Blätter (Stomata) und damit zu einer verminderten Wasserabgabe der Pflanzen über die Stomata (verminderte stomatäre Transpiration). Auf diese Weise kann die Pflanze einer unzureichenden Wasserversorgung entgegenwirken. Allerdings reicht die Wirkung der endogenen ABA bei großer Belastung nicht immer aus, um die Pflanze vor Schädigungen durch Hitze oder Trockenheit zu bewahren.

Exogen zugeführte ABA — z.B. durch Besprühen der Pflanzen mit Lösungen von ABA — führt zu einer verstärkten Schließung der Stomata und damit zu einer erheblich verminderten Transpiration. Die behandelten Pflanzen sind dadurch wesentlich resistenter gegen Hitze-und Trockenheitsstreß als unbehandelte.

Eine Behandlung von Kulturpflanzen mit Transpirationsinhibitoren wäre demnach in der landwirtschaftlichen Praxis von sehr großem Nutzen, da sich mit solch einer Behandlung Schädigungen der Kulturpflanzen durch Hitze-und Trockenheitsstreß, die zu internem Wassermangel, zur Welke, zu Ertragseinbußen oder sogar zum völligen Absterben führen können, vermeiden ließen. Derartige Schädigungen stellen in manchen landwirtschaftlichen Anbaugebieten, insbesondere in ariden Gebieten, die regelmäßig durch Hitze und Trockenheit bedroht sind, ein großes Problem dar. Dort besteht ein dringendes Bedürfnis nach Mitteln zur Verminderung der Transpiration von Kulturpflanzen.

Obwohl exogen applizierte ABA aufgrund ihrer biologischen Wirkung als Transpirationsinhibitor für Kulturpflanzen geeignet ist, hat sie bislang keine Verwendung in der landwirtschaftlichen Praxis gefunden. Der Grund hierfür ist darin zu suchen, daß ausreichende Mengen ABA nicht mit einem im Hinblick auf die angestrebte landwirtschaftliche Zielsetzung vertretbaren technischen Aufwand zur Verfügung gestellt werden können. ABA kommt in Pflanzen nur in sehr geringen Mengen vor und ist nur unter ganz erheblichem Aufwand daraus zu isolieren. Andererseits sind die bekannten Totalsynthesen der Abscisinsäure [J.W. Cornforth et al., J. Chem. Soc. C., 1565 (1968) ; D.L. Roberts et al., J. Org. Chem 33, 3566 (1968) ; T. Oritani et al., Agric. Biol. Chem. (Tokyo) 34, 108 (1970) ; J.A. Findlay et al. Can. J. Chem. 49, 2369 (1971) ; H.J. Mayer et al., Helv. Chim. Acta 59, 1424 (1976) ; F. Kienzle et al., Helv. Chim. Act 61, 2616 (1978) ; M.G. Constantino et al., J. Org. Chem. 51, 253 (1986)] so schwierig und erfordern einen so hohen technischen und ökonomischen Aufwand, daß ABA zur Herstellung von Mitteln zur Regulierung des Pflanzenwachstums, insbesondere zur Herstellung von Mitteln zur Regulierung der Transpiration von Kulturpflanzen, nicht in Betracht kommt.

Weiterhin ist bekannt, daß die ABA-ähnlichen Acetylenverbindungen aus der DE-A-3143721 und aus der EP-A-78509, die unter die Formel I fallen, in ihrer biologischen Aktivität der natürlichen ABA entsprechen (s. J. Jung und K. Grossmann, J. Plant. Physiol. 121, 361 (1985)).

Es wurde gefunden, daß Mittel, die mindestens eine Acetylenverbindung der allgemeinen Formel I

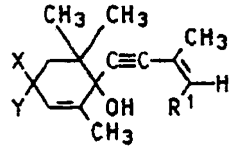 (I),

in der die Substituenten

$R^1$ $CH_2OH$, COOH, $CH_2OR^4$, $COOR^4$ oder CHXY,

X $OR^2$ und

Y OR³ bedeuten oder X und Y gemeinsam für gegebenenfalls durch $C_1$-$C_4$-Alkyl mono-, di- oder trisubstituiertes $C_2$-$C_5$-Alkylendioxy oder für ein doppelt gebundenes Sauerstoffatom stehen, wobei

$R^2$, $R^3$ $C_1$-$C_8$-Alkyl und

$R^4$ $C_1$-$C_8$-Alkyl, $C_2$-$C_8$-Alkoxyalkyl, $C_2$-$C_4$-Halogenalkyl, Phenyl oder $C_7$-$C_{16}$-Phenylalkyl sind,

und mindestens einen Phenylbenzylharnstoff der allgemeinen Formel II

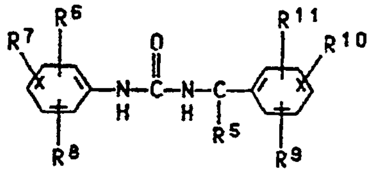

(II),

in der die Substituenten

$R^5$ Wasserstoff, $C_1$-$C_4$-Alkyl, $C_1$-$C_4$-Alkoxy, $C_1$-$C_4$-Halogenalkyl, $C_1$-$C_4$-Halogenalkoxy, Phenyl oder $C_7$-$C_{16}$-Phenylalkyl und

$R^6$-$R^{11}$ unabhängig voneinander Wasserstoff, $C_1$-$C_4$-Alkyl, $C_1$-$C_4$-Alkoxy, Halogen, $C_1$-$C_4$-Halogenalkyl, $C_1$-$C_4$-Halogenalkoxy, Phenyl, Phenoxy, Nitro, Cyano, Hydroxy, $OR^4$, CHO oder $COOR^4$

bedeuten, enthalten, die Transpiration von Pflanzen vermindern und/oder Beeinträchtigungen der Pflanzen durch Hitze- und Trockenstreß vermeiden, wobei synergistische Effekte auftreten.

Ferner wurde ein Verfahren zu deren Ausbringung und deren Verwendung zur Transpirationsminderung von Pflanzen gefunden.

Die Acetylenverbindungen I sind zum Teil aus DE-A-3143721 und aus EP-A-78509 bekannt oder lassen sich nach an sich bekannten Methoden (Liebigs Ann. Chemie, 1979, S. 1945-1951 ; J. Org. Chem. 51, 253-254 (1986) herstellen.

Die Phenylbenzylharnstoffe der Formel II sind z.B. aus J. Chin. Chem. Soc. 13, 22 (1946), Helv. Chim. Acta 21, 1137 (1938), Can. J. Chem. 30, 225 (1952) und Can. J. Chem. 31, 896 (1953) bekannt oder lassen sich nach an sich bekannten Methoden (Houben/Weyl, Bd. VIII, Seite 149 ff, Georg Thieme Verlag, Stuttgart, 1952) herstellen.

Im einzelnen haben die Substituenten in den Formeln I und II folgende Bedeutungen :

$R^1$ — $CH_2OH$,
— COOH,
— $CH_2OR^4$,
— $COOR^4$,
— $CH(OR^2)(OR^3)$

X — $OR^2$,

Y — $OR^3$,

X und Y — gemeinsam =O,
— $C_2$-$C_5$-Alkylendioxy, wie O-$(CH_2)_2$-O, O-$(CH_2)_3$O, O-$(CH_2)_4$-O und O-$(CH_2)_5$-O,
— durch $C_1$-$C_4$-Alkyl mono-, di- oder gegebenenfalls trisubstituiertes $C_2$-$C_5$-Alkylendioxy mit Alkylenbrücken wie —$CH(CH_3)CH_2$—, —$CH(C_2H_5)CH_2$—, —$CH(CH_3)CH(CH_3)$—, —$CH(CH_3)CH_2CH_2$—, —$CH_2CH(CH_3)CH_2$—, —$CH_2C(CH_3)_2CH_2$—, —$CH(CH_3)CH_2CH(CH_3)$—, —$CH(CH_3)CH_2CH_2CH_2$—, —$CH_2CH(CH_3)CH_2CH_2$—, —$CH_2CH(CH_3)CH(CH_3)CH_2$—, —$CH(CH_3)CH_2CH_2CH_2CH_2$—, —$CH_2CH(CH_3)CH_2CH_2CH_2$—, —$CH_2CH_2CH(CH_3)CH_2CH_2$— und —$CH_2CH_2CH(CH_3)CH_2CH_2$—,

$R^2$, $R^3$ — $C_1$-$C_8$-Alkyl, bevorzugt $C_1$-$C_4$-Alkyl, wie Methyl, Ethyl, n-Propyl, iso-Propyl, n-Butyl, iso-Butyl, sec-Butyl und tert.-Butyl,

$R^4$ — $C_1$-$C_8$-Alkyl, bevorzugt $C_1$-$C_4$-Alkyl, wie Methyl, Ethyl, n-Propyl, iso-Propyl, n-Butyl, iso-Butyl, sec-Butyl und tert.-Butyl,
— $C_2$-$C_8$-Alkoxyalkyl, bevorzugt $C_2$-$C_4$-Alkoxyalkyl, wie Methoxymethyl, Methoxyethyl, Methoxy-n-propyl, Methoxy-iso-propyl, Ethoxymethyl, Ethoxyethyl, n-Propyoxymethyl und iso-Propoxymethyl,
— $C_1$-$C_4$-Halogenalkyl, bevorzugt $C_1$-$C_4$-Fluor- und/oder Chloralkyl, besonders bevorzugt $C_1$-$C_2$-Fluor- und/oder Chloralkyl, wie Fluormethyl, Difluormethyl, Trifluormethyl, Chlormethyl, Dichlormethyl, Trichlormethyl, Chlorfluormethyl, Dichlorfluormethyl, Chlordifluormethyl, 2,2,2-Trifluorethyl, 2,2,2-Trichlorethyl, Pentafluorethyl und Pentachlorethyl,

— Phenyl,
— $C_7$-$C_{16}$-Phenylalkyl, bevorzugt $C_7$-$C_{10}$-Phenylalkyl, wie Benzyl, 1-Phenethyl und 2-Phenethyl,

$R^5$ — Wasserstoff,
— $C_1$-$C_4$-Alkyl, wie Methyl, Ethyl, n-Propyl, iso-Propyl, n-Butyl, iso-Butyl, sec-Butyl und tert-Butyl, bevorzugt Methyl und Ethyl,
— $C_1$-$C_4$-Alkoxy, wie Methoxy, Ethoxy, n-Propyoxy, iso-Propoxy, n-Butoxy, iso-Butoxy, sec.-Butoxy und tert.-Butoxy, bevorzugt Methoxy und Ethoxy,
— $C_1$-$C_4$-Halogenalkyl, bevorzugt $C_1$-$C_4$-Fluor- und/oder Chloralkyl, besonders bevorzugt $C_1$-$C_2$-Fluor- und/oder Chloralkyl, wie Fluormethyl, Difluormethyl, Trifluormethyl, Chlormethyl, Dichlormethyl, Trichlormethyl, Chlorfluormethyl, Dichlorfluormethyl, Chlordifluormethyl, 2,2,2-Trifluorethyl, 2,2,2-Trichlorethyl, Pentafluorethyl, Pentachlorethyl,
— $C_1$-$C_4$-Halogenalkoxy, bevorzugt $C_1$-$C_4$-Fluor- und/oder Chloralkoxy, besonders bevorzugt $C_1$-$C_2$-Fluor- und/oder Chloralkoxy, wie Fluormethoxy, Difluormethoxy, Trifluormethoxy, Chlormethoxy, Dichlormethoxy, Trichlormethoxy, Chlorfluormethoxy, Dichlorfluormethoxy, Chlordifluormethoxy, 2,2,2-Trifluorethoxy, 2,2,2-Trichlorethoxy, Pentafluorethoxy und Pentachlorethoxy,
— Phenyl,
— $C_7$-$C_{16}$-Phenylalkyl, bevorzugt $C_7$-$C_{10}$-Phenylalkyl, wie Benzyl, 1-Phenethyl und 2-Phenethyl,

$R^6$-$R^{11}$ — unabhängig voneinander
— Wasserstoff,
— $C_1$-$C_4$-Alkyl, wie Methyl, Ethyl, n-Propyl, iso-Propyl, n-Butyl, iso-Butyl, sec-Butyl und tert-Butyl, bevorzugt Methyl und Ethyl,
— $C_1$-$C_4$-Alkoxy, wie Methoxy, Ethoxy, n-Propoxy, iso-Propoxy, n-Butoxy, iso-Butoxy, sec-Butoxy und tert-Butoxy, bevorzugt Methoxy und Ethoxy,
— Halogen, wie Fluor, Chlor, Brom und lod, bevorzugt Fluor, Chlor und Brom,
— $C_1$-$C_4$-Halogenalkyl, bevorzugt $C_1$-$C_4$-Fluor- und/oder Chloralkyl, besonders bevorzugt $C_1$-$C_2$-Fluor- und/oder Chloralkyl, wie Fluormethyl, Difluormethyl, Trifluormethyl, Chlormethyl, Dichlormethyl, Trichlormethyl, Chlorfluormethyl, Dichlorfluormethyl, Chlordifluormethyl, 2,2,2-Trifluorethyl, 2,2,2-Trichlorethyl, Pentafluorethyl und Pentachlorethyl,
— $C_1$-$C_4$-Halogenalkoxy, bevorzugt $C_1$-$C_4$-Fluor- und/oder Chloralkoxy, besonders bevorzugt $C_1$-$C_2$-Fluor- und/oder Chloralkoxy, wie Fluormethoxy, Difluormethoxy, Trifluormethoxy, Chlormethoxy, Dichlormethoxy, Trichlormethoxy, Chlorfluormethoxy Dichlorfluormethoxy, Chlordifluormethoxy, 2,2,2-Trifluorethoxy, 2,2,2-Trichlorethoxy, 1,1,2,2-Tetrafluorethoxy, Pentafluorethoxy und Pentachlorethoxy,
— Halogen, bevorzugt Fluor, Chlor oder Brom,
— Phenyl,
— Phenoxy,
— Nitro,
— Cyano,
— Hydroxy,
— $OR^4$,
— CHO und
— $COOR^4$.

Die Verbindungen I und II sind in den erfindungsgemäßen Mitteln in Gewichtsverhältnissen von 10 : 1 bis 0,01 : 1, vorzugsweise von 5 : 1 bis 0,05 : 1 und besonders bevorzugt von 2 : 1 bis 0,2 : 1 enthalten.

Die Acetylenverbindungen I können in Aufwandmengen von 0,01 bis 10 kg/ha, vorzugsweise 0,1 bis 3 kg/ha, die Harnstoffe II in Aufwandmengen von 0,05 bis 10 kg /ha, vorzugsweise von 0,1 bis 3 kg/ha, eingesetzt werden.

Die erfindungsgemäßen Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungformen richten sich ganz nach den Verwendungszwecken ; sie sollten in jedem Fall möglichst die feinste Verteilung der Mittel bzw. der in ihnen enthaltenden Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische und aromatische Kohlenwasserstoffe, z.B. Toluol, Xylol, Paraffin, Tetrahydronaphthalin, alkylierte Naphthaline oder deren Derivate, Methanol, Ethanol, Propanol,

Butanol, Cyclohexanol, Cyclohexanon, Chlorbenzol, Isophoron oder stark polare Lösungsmittel, wie N,N-Dimethylformamid, Dimethylsulfoxid, N-Methylpyrrolidon oder Wasser in Betracht.

Wäßrige Anwendungsformen können aus Emulsionskonzentraten, Dispersionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol oder Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetat, Sorbitester, Lignin, Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralien wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Formulierungen enthalten zwischen 0,1 und 95 Gew.%, vorzugsweise zwischen 0,5 und 90 Gew.%, Wirkstoff.

Die erfindungsgemäßen Mittel werden angewendet, indem man die Pflanzen und/oder den Boden mit den Mitteln besprüht oder bestäubt oder die Samen der Pflanzen mit den Mitteln behandelt.

In Anbetracht des erfaßbaren Wirkungsspektrums zur Anwendung bei Pflanzen und der erwünschten Beeinflussung des Transpirationsverhaltens derselben sowie angesichts der Vielfalt der Applikationsmethoden können die erfindungsgemäßen Mittel je nach Substitutionsmuster bei einer großen Zahl von Pflanzen eingesetzt werden.

Nachfolgend sind geeignete Pflanzen aufgeführt :

| Botanischer Name | Deutscher Name |
| --- | --- |
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |
| Carthamus tinctorius | Saflor - Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |

| Botanischer Name | Deutscher Name |
|---|---|
| Coffea arabica (Coffea canephora, Coffea liberica) | Kaffee |
| Cucumis melo | Melone |
| Cucumis sativus | Gurke |
| Cynodon dactylon | Bermudagras |
| Elaeis guineensis | Ölpalme |
| Fragaria vesca | Erdbeere |
| Glycine max | Sojabohne |
| Gossypium hirsutum (Gossypium arboreum, Gossypium herbaceum, Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lactua sativa | Kopfsalat |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |

| Botanischer Name | Deutscher Name |
|---|---|
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sesamum indicum | Sesam |
| Solanum tuberosum | Kartoffel |
| Sorghum bicolor (s. vulgare) | Mohrenhirse |
| Sorghum dochua | Zuckerhirse |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung zusätzlicher Effekte können die erfindungsgemäßen Mittel sowohl untereinander als auch mit Vertretern von herbiziden oder wachstumsregulatorischen oder fungiziden Wirkstoffen gemischt und gemeinsam ausgebracht werden.

Außerdem kann es von Nutzen sein, die erfindungsgemäßen Mittel allein oder in Kombination mit Herbiziden auch noch mit Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die Formulierungen bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise im Vorauflaufverfahren, im Nachauflaufverfahren oder als Beizmittel.

Beispiele für Formulierungen sind :

I 20 Gewichtsteile einer Mischung aus I/1 und II/1 werden in 3 Gewichtsteilen des Natriumsalzes der Diisobutylnaphthalinsulfonsäure, 17 Gewichtsteilen des Natriumsalzes einer Ligninsulfonsäure aus einer Sulfitablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gew.% des Wirkstoffs enthält.

II 3 Gewichtsteile einer Mischung aus I/1 und II/2 werden mit 97 Gewichtsteilen feinteiligem Kaolin innig vermischt. Man erhält auf diese Weise ein Stäubemittel, das 3 Gew.% des Wirkstoffs enthält.

III 30 Gewichtsteile einer Mischung aus I/1 mit II/3 werden in einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

IV 40 Gewichtsteile einer Mischung aus I/1 mit II/4 werden mit 10 Teilen Natriumsalz eines Phenolsulfonsäure-harnstoff-formaldehyd-Kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gew.% Wirkstoff enthält.

V 20 Teile einer Mischung aus I/1 mit II/5 werden mit 2 Teilen Calciumsalz der Dodecylbenzolsulfonsäure, 8 Teilen Fettalkoholpolyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

VI Man vermischt 90 Gewichtsteile einer Mischung aus I/1 mit II/6 mit 10 Gewichtsteilen N-Methyl-α-pyrrolidon und erhält eine Lösung, die zur Anwendung in Form kleinster Tropfen geeignet ist.

VII 20 Gewichtsteile einer Mischung aus I/1 mit II/1 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

VIII 20 Gewichtsteile einer Mischung aus I/1 mit II/1 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

IX 20 Gewichtsteile einer Mischung aus I/1 mit II/1 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

Beispiele für Verbindungen I und II, die in den erfindungsgemäßen Mitteln enthalten sein können, sind nachstehend tabellarisch aufgeführt:

Tabelle 1

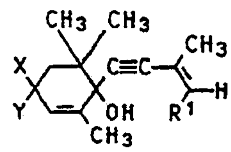

(I).

| Verbindung Nr. | $R^1$ | X | Y |
|---|---|---|---|
| I/1 | $-CH(OCH_3)_2$ | $O-CH(CH_3)CH_2-O$ | |
| I/2 | 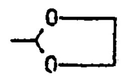 | $O-CH(CH_3)CH_2-O$ | |
| I/3 | 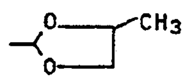 | $O-CH(CH_3)CH_2-O$ | |
| I/4 | $-CH(OCH_3)_2$ | $O-CH_2CH_2-O$ | |
| I/5 | 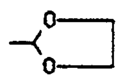 | $O-CH_2CH_2-O$ | |
| I/6 | 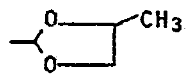 | $O-CH_2CH_2-O$ | |
| I/7 | $-CHO$ | $O-CH_2CH_2-O$ | |
| I/8 | $-CH_2OH$ | $O-CH_2CH_2-O$ | |
| I/9 | $-CH_2OCH_3$ | $O-CH_2CH_2-O$ | |
| I/10 | $-CH_2OCH_2OCH_3$ | $O-CH_2CH_2-O$ | |
| I/11 | $-COOH$ | $O-CH_2CH_2-O$ | |
| I/12 | $-COOCH_3$ | $O-CH_2CH_2-O$ | |
| I/13 | $-COOC_2H_5$ | $O-CH_2CH_2-O$ | |
| I/14 | $-CH_2OH$ | $O-CH_2C(CH_3)_2CH_2-O$ | |
| I/15 | $-CHO$ | $O-CH_2C(CH_3)_2CH_2-O$ | |
| I/16 | 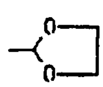 | $O-CH_2C(CH_3)_2CH_2-O$ | |
| I/17 | $-CH(OCH_3)_2$ | $O-CH_2C(CH_3)_2CH_2-O$ | |
| I/18 | $-COOH$ | $O-CH_2C(CH_3)_2CH_2-O$ | |
| I/19 | $-COOCH_3$ | $O-CH_2C(CH_3)_2CH_2-O$ | |
| I/20 | $-CH_2OH$ | $=O$ | |

Tabelle 1 (Fortsetzung)

| Verbindung Nr. | $R^1$ | X | Y |
|---|---|---|---|
| I/21 | $-CH_2OCH_3$ | =O | |
| I/22 | $-CH_2OCH_2OCH_3$ | =O | |
| I/23 | $-CHO$ | =O | |
| I/24 | 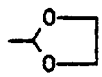 | =O | |
| I/25 | $-CH(OCH_3)_2$ | =O | |
| I/26 | $-COOH$ | =O | |
| I/27 | $-COOCH_3$ | =O | |
| I/28 | $-COOC_2H_5$ | =O | |
| I/29 | $-CH(OCH_3)$ | $OCH_3$ | $OCH_3$ |
| I/30 | $-COOCH_3$ | $OCH_3$ | $OCH_3$ |

Tabelle 2

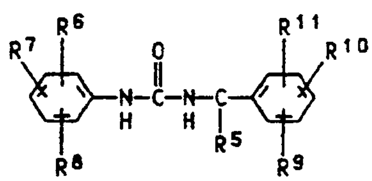

(II)

| Verbindung Nr. | $R^5$ | $R^6$ | $R^7$ | $R^8$ | $R^9$ | $R^{10}$ | $R^{11}$ |
|---|---|---|---|---|---|---|---|
| II/1 | H | H | H | H | H | H | H |
| II/2 | H | 4-Fluor | H | H | H | H | H |
| II/3 | H | 4-Chlor | H | H | H | H | H |
| II/4 | H | 4-Brom | H | H | H | H | H |
| II/5 | H | 2-Chlor | H | H | H | H | H |
| II/6 | H | 2-Methyl | H | H | H | H | H |
| II/7 | H | 4-Methyl | H | H | H | H | H |
| II/8 | H | 4-Nitro | H | H | H | H | H |
| II/9 | H | 4-Cyano | H | H | H | H | H |

Tabelle 2 (Fortsetzung)

| Verbindung Nr. | $R^5$ | $R^6$ | $R^7$ | $R^8$ | $R^9$ | $R^{10}$ | $R^{11}$ |
|---|---|---|---|---|---|---|---|
| II/10 | H | 4-CHO | H | H | H | H | H |
| II/11 | H | 4-$COOCH_3$ | H | H | H | H | H |
| II/12 | H | 4-O-Phenyl | H | H | H | H | H |
| II/13 | H | 4-OH | H | H | H | H | H |
| II/14 | H | 4-$OCH_3$ | H | H | H | H | H |
| II/15 | H | 4-$CF_3$ | H | H | H | H | H |
| II/16 | $C_2H_5$ | H | | | | | |
| II/17 | $CH_3$ | H | | | | | |
| II/18 | $CH_3$ | 4-Fluor | H | H | H | H | H |
| II/19 | $CH_3$ | 4-Chlor | H | H | H | H | H |
| II/20 | $CH_3$ | 4-Brom | H | H | H | H | H |
| II/21 | $CH_3$ | 4-$CH_3$ | 2-$CH_3$ | 6-$CH_3$ | H | H | H |
| II/22 | $CH_3$ | 2-$CH_3$ | H | H | H | H | H |
| II/23 | $CH_3$ | 2-Chlor | H | H | H | H | H |
| II/24 | H | H | H | H | 4-$CH_3$ | H | H |
| II/25 | H | 4-$CH_3$ | H | H | 4-$CH_3$ | H | H |
| II/26 | H | 4-Fluor | H | H | 2-$CH_3$ | 4-$CH_3$ | 6-$CH_3$ |
| II/27 | H | 4-Fluor | H | H | 4-Chlor | H | H |
| II/28 | $CH_3$ | 4-$CH_3$ | H | H | 4-$CH_3$ | H | H |
| II/29 | $CH_3$ | 4-Fluor | H | H | 4-$CH_3$ | H | H |

Anwendungsbeispiele :

Beispiele A bis C

Sommergerste (Hordeum vulgare L. cv. Union) wurde über 14 Tage unter standardisierten Gewächshausbedingungen in einem Torfsubstrat mit 80 Pflanzen/ 500 ml Topf gezogen (Jung und Grossmann, J. Plant Physiol. 121, 361-367, 1985). Die Pflanzen wurden ausreichend gegossen und mit wässrigen Aufbereitungen der in den Tabellen A und B angegebenen Mittel blattbehandelt. Anschließend wurde an bestimmten Tagen durch Auswiegen der Töpfe der Wasserverbrauch der Pflanzen bestimmt und die verbrauchte Wassermenge ergänzt. Die Mittel wurden hergestellt aus den entsprechenden Verbindungen I und II, formuliert in einer Mischung aus Cyclohexanon (4 Teile) und Emulphor EI (1 Teil). Die Endmenge der Formulierungsmittel in der wässrigen Aufbereitung der Mittel betrug ca. 2 Vol.%. Die umgerechnete Menge an Spritzbrühe betrug 1000 l/ha.

Tabelle A

| Wirkstoff Nr. | Aufwandmenge an Wirkstoff bzw. Wirkstoffmischung [kg/ha] | Wasserverbrauch in % 2. | 4. | 7. Tag | zu Kontrolle am Gesamtverbrauch |
|---|---|---|---|---|---|
| I/1 | 0,25 | 80 | 103 | 97 | 94 |
| I/1 | 0,5 | 72 | 95 | 95 | 87 |
| II/1 | 2,0 | 97 | 96 | 100 | 97 |
| I/1 + II/1 | 0,25 + 2,0 | 61 | 83 | 90 | 78 |
| I/1 + II/1 | 0,5 + 2,0 | 59 | 76 | 84 | 73 |
| unbehandelt (Kontrolle) | 0 | 100 | 100 | 100 | 100 |

Tabelle B

| Wirkstoff Nr. | Aufwandmenge an Wirkstoff bzw. Wirkstoffmenge [kg/ha] | Wasserverbrauch in % 1. | 4. | 7. | 11. Tag | zu Kontrolle am Gesamtverbrauch |
|---|---|---|---|---|---|---|
| I/1 | 1 | 49 | 74 | 85 | 90 | 79 |
| I/1 + II/1 | 1 + 2 | 43 | 58 | 65 | 76 | 64 |
| unbehandelt | 0 | 100 | 100 | 100 | 100 | 100 |

Die Ergebnisse, dargestellt in den Tabellen A und B, zeigen, daß II/1 selbst keinen Einfluß auf den Wasserverbrauch der Pflanzen ausübt. In Kombination mit I/1, das die Transpiration der Pflanzen reduziert, wird die Wirkung von I/1 durch II/1 deutlich verstärkt. Der Wasserverbrauch wird effizienter und länger anhaltend eingeschränkt, so daß die Pflanze in die Lage versetzt wird, ökonomischer mit ihren Wasservorräten umzugehen. Nach dem vollständigen Absetzen der Bewässerung treten Welke-, Seneszenz- und Vertrocknungserscheinungen erst einige Tage später ein als bei den Pflanzen, die allein mit dem Wirkstoff I/1 behandelt wurden.

Beispiel C

Sommergerste wurde unter Gewächshausbedingungen kultiviert und, wie in Beispiel A und B beschrieben, behandelt. Der Wasserverbrauch der Pflanzen wurde an bestimmten Tagen durch Auswiegen bestimmt.

Tabelle C

| Wirkstoff Nr. | Aufwandmenge an Wirkstoff bzw. Wirkstoffmischung [kg/ha] | Wasserverbrauch in % 2. | 4. | 7. Tag | zu Kontrolle am Gesamtverbrauch |
|---|---|---|---|---|---|
| I/5 | 0,25 | 63 | 76 | 100 | 80 |
| I/5 | 0,5 | 62 | 73 | 99 | 76 |
| I/5 | 1,0 | 57 | 54 | 84 | 62 |
| I/5 + II/1 | 0,25 + 2,0 | 57 | 58 | 92 | 66 |
| I/5 + II/1 | 0,5 + 2,0 | 53 | 47 | 74 | 54 |
| I/5 + II/1 | 1,0 + 2,0 | 53 | 43 | 69 | 51 |
| unbehandelt (Kontrolle) | 0 | 100 | 100 | 100 | 100 |
| I/3 | 0,25 | 67 | 78 | 99 | 81 |
| I/3 | 0,5 | 69 | 78 | 100 | 81 |
| I/3 | 1,0 | 59 | 56 | 81 | 62 |
| I/3 + II/1 | 0,25 + 2,0 | 58 | 65 | 94 | 69 |
| I/3 + II/1 | 0,5 + 2,0 | 55 | 58 | 87 | 65 |
| I/3 + II/1 | 1,0 + 2,0 | 54 | 48 | 71 | 56 |
| unbehandelt (Kontrolle) | 0 | 100 | 100 | 100 | 100 |

Tabelle C zeigt, daß II/1 in Kombination mit I/5 und I/3 deren Wirkung als Antitranspirant deutlich fördert.

Beispiel D

Sommergerste wurde unter Gewächshausbedingungen kultiviert und, wie in Beispiel A beschrieben, behandelt. Der Wasserverbrauch der Pflanzen wurde 11 Tage nach Behandlung durch Auswiegen bestimmt.

Tabelle D

| Wirkstoff Nr. | Aufwandmenge Wirkstoff bzw. an Wirkstoffmischung [kg/ha] | Wasserverbrauch in % 11 Tage nach Behandlung |
|---|---|---|
| I/1 | 1 | 84 |
| II/1 | 2 | 97 |
| II/2 | 2 | 100 |
| II/3 | 2 | 99 |
| II/4 | 2 | 98 |
| II/5 | 2 | 99 |
| II/6 | 2 | 102 |
| I/1 + II/1 | 1 + 2 | 69 |
| I/1 + II/2 | 1 + 2 | 68 |
| I/1 + II/3 | 1 + 2 | 74 |
| I/1 + II/4 | 1 + 2 | 72 |
| I/1 + II/5 | 1 + 2 | 75 |
| I/1 + II/6 | 1 + 2 | 78 |
| Unbehandelt (Kontrolle) | 0 | 100 |

Tabelle D zeigt, daß die Harnstoffe II/1 bis II/6 synergistisch die Wirkung von I/1 als Antitranspirans erhöhen.

**Patentansprüche**

1. Mittel zur Verminderung der Transpiration von Pflanzen und/oder zur Vermeidung von Beeinträchtigungen der Pflanzen durch Hitze- und Trockenstreß, dadurch gekennzeichnet, daß es mindestens eine Acetylenverbindung der allgemeinen Formel I

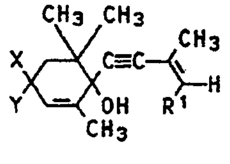 (I),

in der die Substituenten

R[1] $CH_2OH$, COOH, $CH_2OR^4$, $COOR^4$ oder CHXY,
X $OR^2$ und
Y $OR^3$ bedeuten
oder X und Y gemeinsam für gegebenenfalls durch $C_1$-$C_4$-Alkyl mono-, di- oder trisubstituiertes $C_2$-$C_5$-Alkylendioxy oder für ein doppelt gebundenes Sauerstoffatom stehen, wobei
$R^2$, $R^3$ $C_1$-$C_8$-Alkyl und
$R^4$ $C_1$-$C_8$-Alkyl, $C_2$-$C_8$-Alkoxyalkyl, $C_2$-$C_4$-Halogenalkyl, Phenyl oder $C_7$-$C_{16}$-Phenylalkyl sind,
und mindestens einen Phenylbenzylharnstoff der allgemeinen Formel II

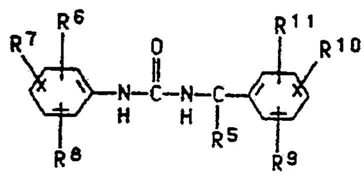
(II),

in der die Substituenten

$R^5$ Wasserstoff, $C_1$-$C_4$-Alkyl, $C_1$-$C_4$-Alkoxy, $C_1$-$C_4$-Halogenalkyl, $C_1$-$C_4$-Halogenalkoxy, Phenyl oder $C_7$-$C_{16}$-Phenylalkyl und
$R^6$-$R^{11}$ unabhängig voneinander Wasserstoff, $C_1$-$C_4$-Alkyl, $C_1$-$C_4$-Alkoxy, Halogen, $C_1$-$C_4$-Halogenalkyl, $C_1$-$C_4$-Halogenalkoxy, Phenyl, Phenoxy, Nitro, Cyano, Hydroxy, $OR^4$, CHO oder $COOR^4$ bedeuten, enthält.

2. Mittel gemäß Anspruch 1, dadurch gekennzeichnet, daß es die Verbindungen I und II im Gewichtsverhältnis von 10 : 1 bis 0,01 : 1 enthält.

3. Mittel gemäß Anspruch 1, enthaltend 0,1 bis 95 Gew.% einer synergistischen Mischung aus einer Acetylenverbindung I und einem Phenylbenzylharnstoff II sowie an sich übliche inerte Zusatzstoffe.

4. Verfahren zur Verminderung der Transpiration von Pflanzen, dadurch gekennzeichnet, daß man die Pflanzen und/oder die Samen und/oder den Boden mit einer zur Transpirationsminderung wirksamen Menge eines Mittels gemäß Anspruch 1 behandelt.

5. Verwendung eines Mittels gemäß Anspruch 1 zur Verminderung der Transpiration von Pflanzen.

## Claims

1. An agent for reducing transpiration in plants and for avoiding impairment to plants caused by heat and dry stress, comprising at least one acetylene compound of the general formula I

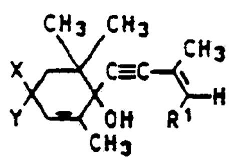
(I),

where the substituents have the following meanings :

$R^1$ is $CH_2OH$, COOH, $CH_2OR^4$, $COOR^4$ or CHXY,
X is $OR^2$ and
Y is $OR^3$
or X and Y together are $C_2$-$C_5$-alkylenedioxy which is unsubstituted or mono-, di- or trisubstituted by $C_1$-$C_4$-alkyl, or are a doubly bonded oxygen atom,
$R^2$, $R^3$ are $C_1$-$C_8$-alkyl and
$R^4$ is $C_1$-$C_8$-alkyl, $C_2$-$C_8$-alkoxyalkyl, $C_2$-$C_4$-haloalkyl, phenyl or $C_7$-$C_{16}$-phenylalkyl,
and at least one phenylbenzylurea of the general formula II

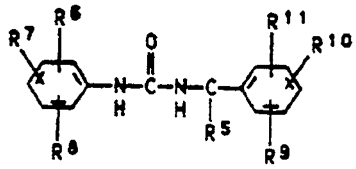

(II),

where the substituents have the following meanings :

- $R^5$ is hydrogen, $C_1$-$C_4$-alkyl, $C_1$-$C_4$-alkoxy, $C_1$-$C_4$-haloalkyl, $C_1$-$C_4$-haloalkoxy, phenyl or $C_7$-$C_{16}$-phenylalkyl and
- $R^6$-$R^{11}$ are independently of one another hydrogen, $C_1$-$C_4$-alkyl, $C_1$-$C_4$-alkoxy, halogen, $C_1$-$C_4$-haloalkyl, $C_1$-$C_4$-haloalkoxy, phenyl, phenoxy, nitro, cyano, hydroxyl, $OR^4$, CHO or $COOR^4$.

2. An agent as set forth in claim 1, containing compounds I and II in a weight ratio of from 10 : 1 to 0.01 : 1.

3. An agent as set forth in claim 1, containing from 0.1 to 95% by weight. of a synergistic mixture of an acetylene compound I and a phenylbenzylurea II, and conventional inert additives.

4. A process for reducing transpiration in plants, wherein the plants and/or the seed and/or the soil are treated with an amount, effective for reducing transpiration, of an agent as set forth in claim 1.

5. The use of an agent as set forth in claim 1 for reducing transpiration in plants.

## Revendications

1. Moyen pour éviter la transpiration des plantes et/ou pour éviter les atteintes aux plantes par des contraintes de chaleur et de sécheresse, caractérisé par le fait qu'il contient au moins un composé acétylénique de la formule générale

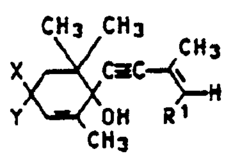

(I)

dans laquelle les substituants sont

- $R^1$ $CH_2OH$, COOH, $CH_2OR^4$ ou CHXY
- X signifie $OR^2$ et
- Y $OR^3$
  ou X et Y ensemble sont mis pour (alkylène en $C_2$-$C_5$)-dioxy éventuellement mono-, di-, ou trisubstitué par alkyle en $C_1$-$C_4$ ou pour un atome d'oxygène à liaison double,
- $R^2$, $R^3$ étant alkyle en $C_1$-$C_8$ et
- $R^4$ alkyle en $C_1$-$C_8$, alcoxyalkyle en $C_2$-$C_8$, halogénoalkyle en $C_2$-$C_4$, phényle ou phénylakyle en $C_7$-$C_{16}$

et au moins une phénylbenzylurée de la formule générale II

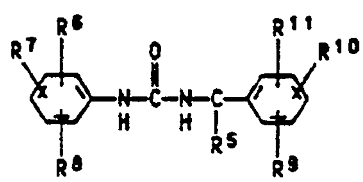

II

dans laquelle les substituants représentent

- $R^5$, hydrogène, alkyle en $C_1$-$C_4$, alcoxy en $C_1$-$C_4$, halogénalkyle en $C_1$-$C_4$, halogénalcoxy en $C_1$-$C_4$, phényle ou phénylalkyle en $C_7$-$C_{16}$

$R^8$-$R^{11}$, indépendamment les uns des autres, hydrogène alkyle en $C_1$-$C_4$, alcoxy en $C_1$-$C_4$, halogène en $C_1$-$C_4$ halogénalkyle en $C_1$-$C_4$, halogénalcoxy en $C_1$-$C_4$, phényle, phénoxy, nitro, cyano, hydroxy, $OR^4$, CHO ou $COOR^4$.

2. Moyen selon la revendication 1, caractérisé par le fait qu'il contient les composés I et II dans un rapport en poids de 10/1 à 0,01/1.

3. Moyen selon la revendication 1, contenant 0,1 à 95 % en poids d'un mélange synergétique d'un composé acétylénique I et d'une phénylbenzylurée II ainsi que des additifs inertes usuels.

4. Procédé pour éviter la transpiration des plantes, caractérisé par le fait que l'on traite les plantes et/ou les semences et/ou le sol avec une quantité efficace pour réduire la transpiration d'un moyen selon la revendication 1.

5. Utilisation d'un moyen selon la revendication 1 pour éviter la transpiration des plantes.